# FASCICULE DE BREVET EUROPEEN

(11) **EP 1 432 210 B1**
(45) Date de publication et mention de la délivrance du brevet: **23.01.2013**
(21) Numéro de dépôt: 03292851.7
(22) Date de dépôt: 17.11.2003
(51) Int. Cl.: H04L 29/06

(54) **Dispositif de contrôle de traitements associés a des flux au sein d'un reseau de communications**
System zum Steuern von Prozessen, die zu Datenstromen in einem Kommunikationsnetzwerk zugehören
System to control processes associated to flows inside a communication network

(30) Priorité: 20.12.2002 FR 0216339
(43) Date de publication de la demande: 23.06.2004
(73) Titulaire: Alcatel Lucent, 75007 Paris (FR)
(72) Inventeur: Josset, Sébastien, 31100 Toulouse (FR); Combes, Stéphane, 31400 Toulouse (FR)
(74) Mandataire: Sciaux, Edmond

(56) Documents cités:
- COMBES: "Satelites in Next Generation Networks - QOS issues" ITU-T, 9 - 11 décembre 2002, XP002252552 Geneva
- COMBES, JOSSET, VERY, BURET, ZEIN: "Network scenario for the IP dedicated satellite access scheme" 8TH KA-BAND UTILIZATION CONFERENCE, 25 - 27 septembre 2002, XP002252553 Baveno, Italy
- JOSSET, COMBES, DUQUERROY,BURET,ZEIN: "Secure multicast with the connectionless IP-dedicated satellite access scheme" 8TH KA-BAND UTILIZATION CONFERENCE, 25 - 27 septembre 2002, XP002252554 Baveno, Italy

## Description

L'invention concerne le domaine des communications entre terminaux d'un réseau de communications, et plus particulièrement la gestion de traitement(s), comme par exemple la qualité de service et la sécurité, associé(s) à des données d'applications échangées entre terminaux.

On entend ici par « terminal », tout équipement de réseau, et notamment les équipements d'utilisateurs, tels que les ordinateurs fixes ou portables, les téléphones fixes ou mobiles, les routeurs ou les serveurs.

De nombreuses applications informatiques, comme par exemple la voix sous IP (ou VoIP), le multimédia sous IP (ou MMoIP) ou ftp, requièrent pour fonctionner un ou plusieurs traitements, comme par exemple un certain niveau de qualité de service (ou QoS pour « Quality of Service ») et/ou un certain niveau de sécurité (authentification et/ou cryptage). Par exemple, dans un réseau satellitaire ou sans fil ce sont généralement les stations de communications qui sont chargées d'associer une qualité de service et/ou une sécurité à des données d'une application choisie, qu'ils ont reçues d'un terminal source et qui sont destinées à un terminal destinataire.

Pour effectuer une telle association, une station de communications, comme par exemple un terminal de satellite, ne dispose que des informations contenues dans les données reçues. Par exemple, dans le cas de paquets de données IP la station de communications dispose des adresses IP source et destinataire, des ports source et destinataire, ainsi qu'éventuellement d'un marquage, par exemple de type Diffserv.

Or, comme le sait l'homme de l'art, les adresses IP source et destinataire ne permettent d'identifier que des terminaux, voire un réseau, mais en aucun cas une application.

Par ailleurs, quelques ports sont recommandés pour certaines applications, comme par exemple le port 25 pour le courrier électronique (ou « e-mail ») et le port 80 pour l'Internet (ou « web »), mais l'attribution qui résulte de telles recommandations s'effectue généralement de façon dynamique ou négociée via un canal de contrôle (comme par exemple ftp, h323 ou sip). Or, si l'on ne peut pas espionner ce canal de contrôle par un suivi des connexions (ce qui nécessite de connaître le protocole propre à chaque application, lequel est souvent crypté), il est impossible de déterminer l'application concernée.

Pour tenter d'améliorer la situation, il a été proposé de doter certaines applications d'un moyen leur permettant de préciser soit leurs besoins en matière de qualité de service, soit leur type de trafic. Mais, la précision de la qualité de service requiert l'utilisation du protocole RSVP, d'un réseau de routeurs supportant RSVP et de librairies spécifiques, si bien qu'elle n'est quasiment jamais effectuée. Par ailleurs, le type de trafic peut être précisé en utilisant le protocole Diffserv dont l'implémentation est relativement simple, mais qui est très peu utilisé dans la pratique, et ne garantit pas l'homogénéité des traitements.

Pour permettre le transport des données IP en mode sécurisé, il a également été proposé un algorithme de mélange d'octets appelé « scrambling DVB-RCS » pour la sécurité du niveau deux (selon le modèle en couches OSI) et le protocole IP Sec en mode de connexion point-à-point (ou « unicast ») ou point-à-multipoint (ou « multicast ») pour la sécurité du niveau trois IP (selon le modèle en couches OSI). Cependant, les flux de données IP à crypter doivent être configurés de façon statique en fonction des adresses source et destinataire qui leurs sont associées, et la sécurité est de type « tout ou rien » entre deux terminaux d'un réseau ou deux réseaux.

En outre, pour permettre le support de la qualité de service (QoS), il a été proposé soit d'utiliser des profils de QoS préétablis associés à chaque terminal, soit d'effectuer des configurations manuelles, soit encore d'établir des communications dynamiques entre l'application concernée et le serveur central du réseau satellitaire (ou NCC pour « Network Control Center »). Mais, dans la première situation il est très difficile de différencier de façon dynamique les flux IP de types temps réel et standard (ou « best-effort »), dans la deuxième situation la correspondance entre les différents types de flux IP et les QoS associées doit être établie manuellement en fonction de certaines adresses source et destinataire, et dans la troisième situation les applications doivent être modifiées de manière à pouvoir interagir avec le NCC, alors même que la majorité d'entre-elles ne sont pas facilement modifiables.

Il en résulte que la majorité des applications se contentent de la QoS et/ou de la sécurité configurée(s) statiquement pour leur hôte.

L'invention a donc pour but de remédier à tout ou partie des inconvénients précités.

Elle propose à cet effet un dispositif dédié au contrôle de traitement(s), tels que la qualité de service (QoS) et la sécurité, associé(s) à des flux de données issus d'applications, au sein d'un réseau de communications comprenant des stations de communications, d'une part, couplées à des terminaux de communications munis d'au moins une application et d'un noyau (ou système d'exploitation) contenant des données d'informations représentatives de ces applications, et d'autre part, capables d'échanger entre-elles des flux de données provenant des terminaux de communications.

Ce dispositif de contrôle se caractérise par le fait qu'il comporte :
- des moyens de traitement chargés, lorsqu'ils reçoivent un message désignant une application, de délivrer des données de service représentatives d'au moins un traitement associé à cette application désignée,
- des moyens d'extraction chargés, lorsqu'ils reçoivent un flux de données émis par un terminal de communications, d'accéder au noyau de ce terminal afin de déterminer l'application associée à ce flux reçu, puis de délivrer aux moyens de traitement un message désignant l'application déterminée, et
- des moyens de contrôle chargés, lorsqu'ils reçoivent des données de service délivrées par les moyens de traitement, de délivrer des données de configuration permettant au moins un traitement adapté aux besoins de l'application associée au flux reçu par la station de communications à laquelle est couplé le terminal dont est issu le flux.

Préférentiellement, chaque terminal de communications du réseau est équipé de moyens d'extraction et de moyens de traitement, et chaque station de communications est équipée de moyens de contrôle. Les moyens de contrôle des stations peuvent fonctionner de façon autonome, ou de façon distribuée. Dans ce dernier cas, ils délivrent leur données de configuration à réception d'une autorisation (ou confirmation) délivrée par un serveur central tel qu'un gestionnaire de bande passante (ou « bandwidth broker ») ou un NCC (pour « Network Control Center »), ou encore un serveur de clés chargé de distribuer des clés pour sécuriser des liens (ou liaisons).

Le dispositif de contrôle selon l'invention pourra comporter d'autres caractéristiques complémentaires qui pourront être prises séparément et/ou en combinaison, et en particulier :
- des moyens d'extraction capables, lorsque le noyau de chaque terminal de communications comporte une interface de contrôle en temps réel des flux réseaux associés aux applications, et lorsqu'ils reçoivent un flux de données, d'accéder à l'interface de contrôle afin de déterminer l'application associée au flux reçu ;
- des moyens de mémorisation pouvant stocker une table de correspondance entre les applications et les données de service. Dans ce cas, les moyens de traitement sont chargés, lorsqu'ils reçoivent un message désignant une application, d'accéder aux moyens de mémorisation afin de déterminer des données de service stockées en correspondance de l'application désignée. Par ailleurs, lorsqu'il n'existe pas de données de services stockées dans les moyens de mémorisation en correspondance d'une application désignée, les moyens de traitement sont préférentiellement agencés de manière à adresser à un utilisateur, via l'interface graphique du terminal de communications dans lequel sont implantés les moyens d'extraction, un message lui demandant de fournir les données de service associées à l'application désignée ;
- des moyens d'extraction chargés de mettre à jour la table de correspondance en fonction d'informations reçues, par exemple, sous la forme d'un fichier de configuration ou d'une interface graphique du terminal de communications dans lequel sont implantés les moyens d'extraction ;
- des moyens d'extraction implantés préférentiellement dans l'une des piles de protocoles du noyau de chaque terminal de communications ;
- des moyens de contrôle agencés, lorsque chaque station de communications possède au moins une pile de protocoles agencée en couches, dont une couche MAC, et lorsqu'ils reçoivent des données de service, pour délivrer des données de configuration permettant de configurer la couche MAC en fonction des besoins associés à un flux à transmettre ou à recevoir ;
- des moyens de traitement capables de délivrer aux moyens de contrôle des données de service représentatives d'au moins un traitement, comme par exemple la qualité de service et/ou la sécurité, associé(s) à des flux à recevoir d'une application implantée dans un terminal de communications distant ;
- des moyens de traitement et des moyens de contrôle capables d'échanger des messages de service (contenant les données de service) selon un protocole d'échange choisi au moins parmi un protocole propriétaire, le protocole SNMP, le protocole XML et le protocole RSVP.

L'invention porte également, d'une première part, sur un terminal de communications comprenant des moyens d'extraction et des moyens de traitement d'un dispositif du type de celui présenté ci-avant, d'une deuxième part, sur un terminal de communications comprenant un dispositif du type de celui présenté ci-avant, d'une troisième part, sur une station de communications, par exemple un terminal de satellite, équipée de moyens de contrôle d'un dispositif du type de celui présenté ci-avant, et d'une quatrième part, sur un réseau de communications, équipé de tels terminaux et/ou de telles stations de communications et de préférence choisi parmi les réseaux satellitaires et les réseaux sans fil.

D'autres caractéristiques et avantages de l'invention apparaîtront à l'examen de la description détaillée ci-après, et des dessins annexés, sur lesquels :
- la figure 1 illustre de façon schématique une partie d'un réseau de communications équipé de dispositifs de contrôle selon l'invention, et
- la figure 2 est un diagramme chronologique illustrant de façon schématique un exemple d'utilisation du protocole RSVP pour la sécurisation d'une liaison satellite.

Les dessins annexés pourront non seulement servir à compléter l'invention, mais aussi contribuer à sa définition, le cas échéant.

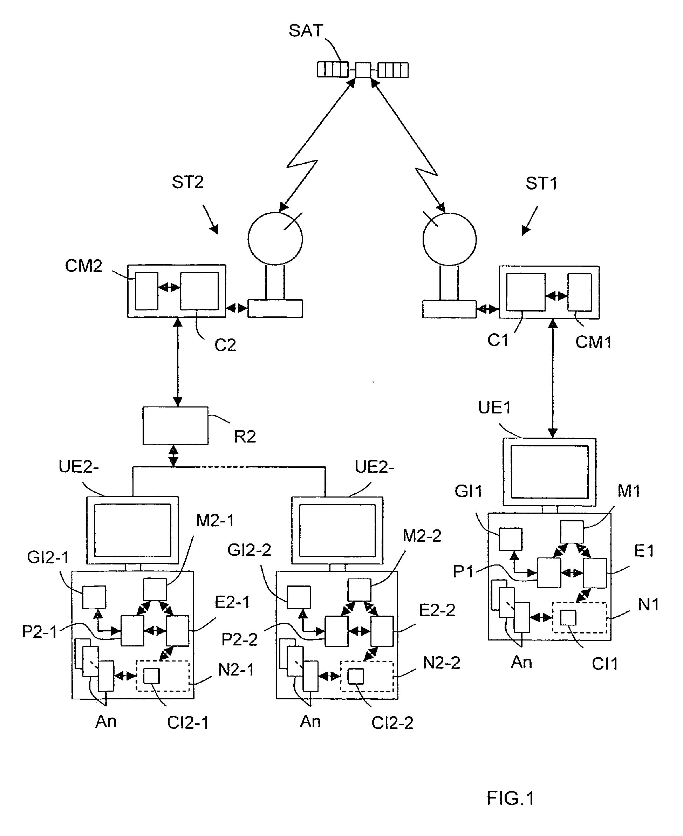

On se réfère tout d'abord à la figure 1 pour décrire, à titre d'exemple illustratif, un réseau de communications de type satellitaire équipé d'un dispositif selon l'invention. Bien entendu, l'invention n'est pas limitée à ce type de réseau. Elle concerne en effet tous les types de réseau capables d'effectuer au moins un traitement sur les flux de données (comme par exemple la qualité de service (ou QoS), la priorité, la sécurité, le filtrage et analogues) et notamment les réseaux sans fil, comme par exemple les réseaux locaux sans fil (ou WLAN pour « Wireless Local Area Network »), les boucles locales radio (ou BLR), et les accès hertziens points à multipoints.

Le réseau de communications satellitaire illustré comprend, de façon très schématique, une multiplicité de stations de communications STi (ici i = 1 et 2, mais il peut prendre toute autre valeur supérieure à deux) raccordées à des terminaux de communications UEi-k (ici i = 1 et 2, et k = 1 et 2, mais ils peuvent prendre toute autre valeur supérieure ou inférieure à deux) et couplées entre-elles par au moins un satellite de communications SAT.

Il est important de noter qu'un terminal de communications UEi et une station de communications STi peuvent être regroupés dans un seul et même équipement. Cela peut notamment être le cas lorsque la station de communications est réalisée sous la forme d'une carte PCI enfichée dans un terminal de communications de type PC.

Dans l'exemple illustré, les terminaux de communications sont des équipements d'utilisateurs UE1 et UE2-k, tels que des ordinateurs fixes ou portables. Mais, il pourrait s'agir de tout type de terminal de communications capable d'échanger des données avec d'autres terminaux ou équipements de réseau, comme par exemple des téléphones mobiles ou fixes, des télécopieurs, des assistants numériques personnels (ou PDA pour « Personal Digital Assistant »), ou des serveurs de fournisseurs de contenus (ou ASP pour « Application Service Provider »).

Par ailleurs, les équipements d'utilisateurs UE2-k sont ici couplés au routeur R2 d'un réseau privé, tel qu'un LAN (ou « Local Area Network »).

Bien entendu, les terminaux de communications UE2-k pourraient ne pas être raccordés à un réseau privé ou public, quel qu'en soit le type. Ils peuvent en effet être couplés, comme le terminal de communications UE1 à l'une des stations de communications STi du réseau, directement, par exemple par un bus, ou indirectement, par exemple via un hub. Mais, dans ce cas, ils doivent être équipés de manière à pouvoir échanger des informations.

En outre, on considère dans ce qui suit que les stations de communications STi sont des terminaux de satellite agencés de manière à échanger des trames de données (par exemple de niveau trois IP) encapsulées selon le protocole de transmission de niveau deux Ethernet. Mais, bien entendu, l'invention n'est pas limitée à un protocole de transmission de niveau deux selon le modèle en couches OSI. Elle concerne tous les protocoles de transmission, et notamment 802.4, 802.5 ou 802.11. D'une manière générale, l'invention concerne plus particulièrement les protocoles de niveau deux (2) ou trois (3), mais elle concerne également les protocoles des autres niveaux et notamment ceux des niveaux un (1) (couche physique) et sept (7) (couche d'applicatifs).

Chaque terminal de satellite STi comprend un module de communications Ci chargé, d'une part, de déterminer comment acheminer des trames vers leurs destinations grâce à une table d'acheminement habituellement renseignée par apprentissage, et d'autre part, de transmettre les trames sur les interfaces air et filaire du réseau satellitaire. La fonction d'acheminement est également appelée « pontage » (ou « bridge ») du fait qu'étant chargée de ne traiter que le protocole de transmission Ethernet elle se contente d'assurer une fonction de commutation du trafic en fonction des adresses physiques ethernet contenues dans les trames. Ce module de communications Ci étant bien connu de l'homme de l'art, il ne sera pas décrit ici en détail. Il est simplement rappelé qu'il est défini par la norme IEEE 802.1d.

Par ailleurs, chaque équipement d'utilisateur UEi comprend ici un système d'exploitation ou noyau Ni-k, muni d'au moins une pile de protocoles, et une ou plusieurs applications An permettant de délivrer des données de différents types. Par exemple, l'une des applications est de type « voix sur IP » (ou VolP). Mais tout autre type d'application peut être implanté dans un terminal de communications UEi, et notamment le multimédia sur IP, la messagerie électronique (généralement associée au port 25), et l'accès à Internet (généralement associé au port 80).

Préférentiellement, chaque équipement d'utilisateur UEi comprend également une interface Cli-k, dédiée au contrôle en temps réel des flux réseaux associés aux applications, et une interface graphique Gli-k, par exemple de type GUI (pour « Graphical User Interface »).

L'interface de contrôle de flux Cli-k est par exemple du type de celle destinée aux pare-feux (ou « firewalls »), comme par exemple l'interface de la société Microsoft, ou les « ipchain » de Linux. Ce type d'interface a été développé pour permettre à un utilisateur de choisir, grâce à une fenêtre qui s'ouvre de façon dynamique, le traitement à appliquer à un flux IP, et notamment l'autorisation d'accéder à un réseau satellitaire, l'attribution d'une qualité de service, la sécurisation (authentification et/ou cryptage (ou chiffrement)), l'établissement de session et l'association à des codes correcteurs d'erreur.

L'invention propose un dispositif dédié au contrôle de traitement(s), comme par exemple la qualité de service (QoS) et la sécurité, associé(s) à des flux de données issus d'applications implantées dans les équipements d'utilisateurs UEi.

Ce dispositif de contrôle comporte, d'une première part, des moyens de traitement Pi-k chargés de délivrer des données de service représentatives d'au moins un traitement associé à une application désignée, d'une deuxième part, des moyens d'extraction Ei-k chargés d'accéder au noyau Ni-k d'un équipement d'utilisateur UEi-k ayant émis un flux de données afin de déterminer l'application associée à ce flux, puis de délivrer aux moyens de traitement Pi-k un message désignant l'application déterminée, et des moyens de contrôle CMi chargés, lorsqu'ils reçoivent des données de service délivrées par les moyens de traitement Pi-k, de délivrer des données de configuration permettant au moins un traitement adapté aux besoins de l'application associée au flux reçu, par le terminal de satellite STi auquel est couplé l'équipement d'utilisateur UEi-k dont est issu le flux.

Dans ce qui suit, on considère à titre illustratif que le traitement associé à une application porte sur la qualité de service (ou QoS) et/ou la sécurité.

Préférentiellement, comme illustré sur la figure 1, les moyens de traitement et les moyens d'extraction de chaque dispositif de contrôle sont distribués sous forme de modules de traitement Pi-k et d'extraction Ei-k dans chaque équipement d'utilisateur UEi-k que ledit dispositif contrôle. Par ailleurs, les moyens de contrôle de chaque dispositif sont préférentiellement agencés sous la forme d'un module de contrôle CMi implanté dans chaque station de communications STi. Ainsi, dans l'exemple illustré, le réseau satellitaire comporte deux dispositifs de contrôle. Le premier dispositif comporte le module de contrôle CM1, implanté dans le terminal de satellite ST1, et les modules d'extraction E1 et de traitement P1, implantés dans l'équipement d'utilisateur UE1. Le second dispositif comporte le module de contrôle CM2, implanté dans le terminal de satellite ST2, et les modules d'extraction E2-1 et E2-2 et de traitement P2-1 et P2-2, implantés dans les équipements d'utilisateurs UE2-1 et UE2-2.

Mais, on pourrait envisager d'implanter un dispositif de contrôle dans chaque équipement d'utilisateur UEi-k ou dans chaque station de communications STi.

Dans la pratique, chaque module d'extraction Ei-k observe tous les flux de données qui entrent et qui sortent de l'équipement UEi-k dans lequel il est implanté. A cet effet, le module d'extraction Ei-k est préférentiellement implanté dans les piles de protocoles du noyau Ni-k. Il peut notamment agir comme un « hook » ou un pilote (ou « driver »).

Par ailleurs, chaque module d'extraction Ei-k détermine préférentiellement l'application An qui est associée à un flux par l'intermédiaire de l'interface de contrôle Cli-k.

A chaque paquet IP correspond en effet un connecteur (ou « socket ») qui est ouvert dans un équipement UEi-k identifiable par son numéro de port. Et la correspondance entre le port, le connecteur (ou socket) et l'identifiant de l'application est disponible par le biais de fonctions mises à disposition par le système d'exploitation Ni-k de l'équipement UEi-k.

Par exemple, dans le cas du système d'exploitation Windows XP, on peut utiliser la fonction « AllocateAndGetTcpExTableFromStack() » de la DLL iphlpapi. De même, dans le cas du système d'exploitation Linux, on peut utiliser la fonction de lecture du fichier « /proc/xx/fd ».

Préférentiellement, chaque module d'extraction Ei-k maintient à jour une table de correspondance entre des identifiants de flux et des identifiants d'applications à partir des données d'informations qu'il obtient dans le noyau Ni-k lorsqu'il accède à l'interface de contrôle Cli-k. Cela peut lui permettre de déterminer plus rapidement l'application qui est associée à un flux qu'il vient de détecter et dont il vient d'identifier le type.

Comme indiqué précédemment, lorsqu'un module d'extraction Ei-k a déterminé l'application associée à un flux, il adresse au module de traitement Pi-k, auquel il est couplé, un message désignant l'application déterminée, de sorte qu'il puisse à son tour déterminer les données de service (ou contexte), représentatives de la qualité de service et/ou de la sécurité, associées à cette application.

Pour déterminer les données de service associées à l'application désignée dans un message reçu, le module de traitement Pi-k interroge préférentiellement une table de correspondance entre les applications, répertoriées au sein de l'équipement d'utilisateur UEi-k, et les données de service. Cette table de correspondance (ou table de contexte) est préférentiellement stockée dans une mémoire Mi-k de l'équipement UEi-k concerné.

Par ailleurs, chaque table de contexte est préférentiellement maintenue à jour par chaque module d'extraction Ei-k à partir de données d'informations fournies par l'utilisateur de l'équipement UEi-k soit sous la forme d'un fichier de configuration, soit par l'intermédiaire de l'interface graphique Gli-k de l'équipement UEi-k. Bien entendu, dans une variante la mise à jour de la table de contexte pourrait être effectuée par le module de traitement Pi-k.

Lorsque la table de contexte ne comporte pas de données de service (ou contexte) correspondant à l'application associée au flux, le module de traitement Pi-k est préférentiellement agencé de manière à adresser à un utilisateur, via l'interface graphique Gli-k de son équipement UEi-k, un message lui demandant de fournir lesdites données de service. Celles-ci peuvent être ensuite éventuellement intégrées dans la table de contexte, après une éventuelle autorisation de l'utilisateur.

Lorsqu'un module de traitement Pi-k a déterminé le contexte (ou les données de service) associé(es) à l'application, il délivre au module de contrôle CMi, qui est implanté dans le terminal de satellite STi auquel est couplé l'équipement d'utilisateur UEi-k dont est issu le flux, des données de configuration permettant de configurer ledit terminal de satellite STi. Cette configuration est destinée à permettre au terminal de satellite STi de mettre à disposition du flux à transmettre des ressources adaptées aux besoins de qualité de service et/ou de sécurité de l'application à laquelle il est associé.

La transmission des données de configuration, entre un module de traitement Pi-k et un module de contrôle CMi, s'effectue préférentiellement selon un protocole de communication choisi au moins parmi le protocole SNMP, le protocole XML et le protocole RSVP ou l'une de ses extensions. Mais, bien entendu, on pourrait également utiliser un protocole propriétaire.

Trois exemples d'échange de données de configuration sont donnés ci-après à titre illustratif, non limitatif. Ces trois exemples correspondent respectivement au protocole XML, à un protocole propriétaire et à une extension des messages du protocole RSVP.

Dans l'exemple d'un protocole basé sur un code XML, on utilise une fonction optimisée de messagerie entre l'agent utilisateur Pi-k, de l'équipement UEi-k, et l'agent de contrôle CMi, du terminal de satellite STi, s'appuyant sur des sockets UDP transportant des structures XML.

Le message contenant les données de configuration, qui est indiqué ci-après et qui est envoyé par l'agent utilisateur Pi-k au terminal de satellite STi, demande à son module de contrôle CMi de provisionner une qualité de service (QoS) de type Constant Bit Rate (CBR) de 64kbit/s pour le flux IP dans le sens allant du terminal de satellite STi vers le satellite SAT, et de sécuriser la transmission sur le lien satellite avec une liaison de type IPSec ESP (à clef de 128 bits dynamique). L'agent utilisateur Pi-k est identifié par un numéro de session (56), et le message est signé.

```
 <?xml version="1.0" encoding="ISO-8859-1"?>
 <UserSTProtocol Version= "1.0" >
       <Sessionld>56</Sessionld>
       <Command type= « SetQoS »>
              <SetQoS>
                    <StreamDescription>
                           <IPSrc> 134.67.89.23</IPSrc>
                           <IPDst>134.67.23.85</IPDsr>
                            <PortSrc>6734</PortSrc>
                           <PortDst>80</PortDsr>
                     </StreamDescription>
                     <QoS>
                            <CBR>64000</CBR>
                     </QoS>
                     <Direction>In</Direction>
              </SetQoS>
       </Command>
       <Command type= « SetSecurity »>
              < SetSecurity >
                     <StreamDescription>
                            <IPSrc>134.67.89.23</IPSrc>
                            <IPDst>134.67.23.85</IPDsr>
                            <PortSrc>6734</PortSrc>
                            <PortDst>80</PortDsr>
                     </StreamDescription>
                     <IPSec>
                            <Algo>ESP</ Algo >
                            <Key type= « generated »>
                            <KeyLength>128</ KeyLength >
                            </Key>
                    </IPSec>
                    <Direction>Bidirectionnal</Direction>
             </ SetSecurity >
      </Command>
      <Signature> BE13 C061 DE4B CB99 7B5C 42EA 1F48 2997 A35C
      D07B </Signature>
      </UserSTProtocol>
```

Dans l'exemple d'un protocole basé sur une messagerie propriétaire, on peut utiliser une fonction optimisée de messagerie entre l'agent utilisateur Pi-k, de l'équipement UEi-k, et l'agent de contrôle CMi, du terminal de satellite STi, s'appuyant sur des sockets UDP transportant des structures C.

```
 Enum CommandType {
      Unknown=0,
      MsgStatusOk=1,
      MsgStatusKO=2,
      SetQos=3,
      SetSecurity=4,
      }
```

```
ProtocoleDataUnit {
 Uint16 Version = 1 ;
 Uint32 sessionld = 56 ;
 Uint32 msgld = 5 ;
 Uint32 CommandType= SetQoSld ;
 SetQoS {
      Uint8 IpSrc[4]= 134.67.89.23 ;
      Uint8 IpDst[4]= 134.67.89.23 ;
      Uint16 PortSrc = 6734 ;
      Uint16 PortDst = 80;
      Uint32 CBR=64000 ;
      Uint32 VBR=0 ;
      Uint32 UBR=0 ;
      Uint32 Direction=in ;
      }
      Uint8 Signature[ ]=BE13 C061 DE4B CB99 7B5C 42EA 1 F48 2997
      A35C D073
      }
```

```
 ProtocoleDataUnit {
 Uint16 Version = 1 ;
 Uint32 sessionld = 56 ;
 Uint32 msgld = 6;
 Uint32 CommandType= SetSecurity;
 SetSecurity {
       Uint8 IpSrc[4]= 134.67.89.23 ;
       Uint8 IpDst[4]= 134.67.89.23 ;
       Uint16 PortSrc = 6734 ;
       Uint16 PortDst = 80;
              Uint32 Algo=ESP ;
              Uint32 KeyLength=128 ;
              Uint32 Key [128]= { 0,...,0}// generated
              }
       Uint8 Signature[ ]=BE13 C061 DE4B CB99 7B5C 42EA 1F48 2997
       A35C D073
       }
```

Le troisième exemple est basé sur le protocole RSVP qui est défini par la norme RFC 2205. Son principal intérêt réside dans son interaction avec certains routeurs qui peuvent prendre en compte ou ignorer les extensions, permettant ainsi une réservation de bande passante et une sécurisation de bout en bout ou par tronçon.

Il est rappelé que les flux IP sont définis par la norme RFC 2210 et que l'authentification des messages RSVP est définie par la norme RFC 2747. En outre, les messages sont ici transportés dans les extensions de messages RSVP.

Par exemple, dans le cas de données de configuration représentatives de la sécurité, lors du passage d'un message PATH, le terminal de satellite STi ajoute dans les champs privés qui encapsulent les données utiles (ou payload) toutes les informations utiles à leur identification. La sécurisation du lien satellite démarre donc à la réception d'un message RSVP RESV.

Pour une sécurité au niveau IP, les flux sont déjà décrits, mais les adresses des terminaux de satellite STi ne peuvent être connues que grâce aux informations contenues dans un paquet RSVP RESV. En revanche, pour une sécurité au niveau deux (2), de type Ethernet ou paquet satellite, les adresses ou les labels source et destination peuvent être ajoutés dans ce paquet RSVP PATH et repris dans le message RSVP RESV.

Par exemple, dans le cas de données de configuration représentatives de la qualité de service (QoS), les demandes de QoS sont actualisées dans les messages RSVP PATH, et appliquées à réception du message RSVP RESV.

L'optimisation de la messagerie, les réservations de ressource et l'établissement d'un lien satellite sécurisé peuvent se faire avec des cadenceurs (ou « timers ») élevés ou de façon semi-statique (en cas de libération sur demande).

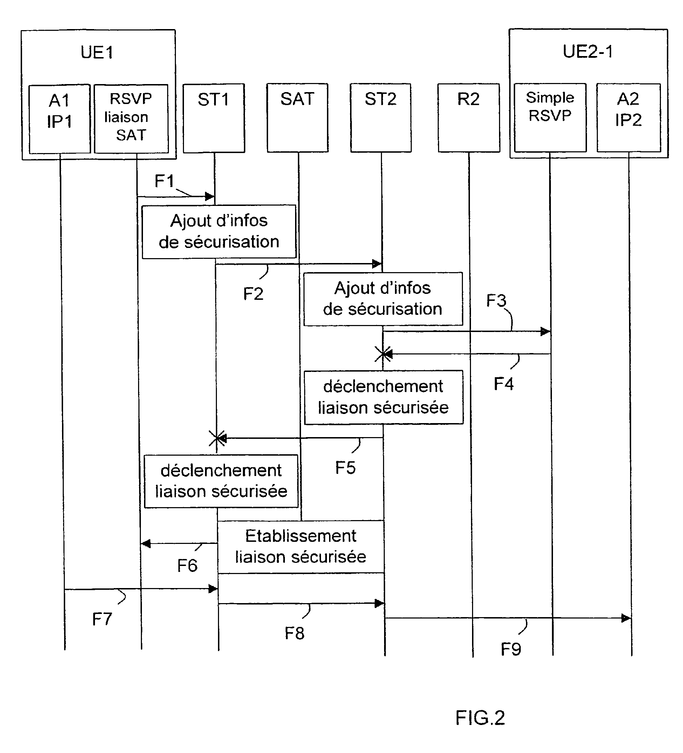

Un exemple d'utilisation de messages RSVP pour la sécurisation d'un lien satellite est illustré sur la figure 2.

Dans cet exemple, l'application A1, tournant sur l'équipement d'utilisateur UE1, d'adresse internet IP1, envoie des données à destination de l'équipement d'utilisateur UE2, d'adresse internet IP2, en utilisant le protocole Internet IP. A cette application A1 est associé le traitement suivant : « Sécuriser sur la liaison satellite entre les stations ST1 et ST2 ». Les données peuvent commencer à être émises sans sécurité et être sécurisées en cours de transmission, ou être bloquées par l'équipement UE1 tant qu'il n'y a pas eu confirmation de la sécurité du lien (comme dans l'exemple illustré).

Un paquet RSVP PATH à destination de l'équipement d'utilisateur UE2 est donc construit par l'équipement d'utilisateur UE1. Ce paquet contient la description du flux IP et des extensions précisant le traitement à lui appliquer. Ce paquet est envoyé vers la station ST1 en respectant le protocole de routage IP (flèche F1).

La station ST1 interprète les extensions RSVP du message PATH, et y ajoute éventuellement des informations sur son adresse satellite. Puis, elle fait suivre le message vers la station ST2 en utilisant le réseau satellite (flèche F2).

La station ST2 interprète les extensions RSVP du message PATH, et y ajoute éventuellement des informations sur son adresse satellite. Puis, elle fait suivre le message vers l'équipement UE2 (flèche F3).

La partie de l'équipement UE2 chargée de RSVP interprète le message RSVP PATH, et renvoie vers la station ST2 un message RSVP RESV qui reprend les informations du message PATH (flèche F4).

La station ST2 interprète les extensions RSVP du message RESV, et initialise la sécurisation du lien satellite entre ST1 et ST2. Puis, elle fait suivre le message vers la station ST1 (flèche F5).

La station ST1 interprète les extensions RSVP du message RESV, y ajoute la confirmation de la sécurisation du lien satellite avec la station ST2, et fait suivre le message à l'équipement UE1 (flèche F6).

L'équipement d'utilisateur UE1 reçoit alors la confirmation de la sécurisation de la liaison, et peut échanger des données avec l'équipement d'utilisateur UE2 sur la liaison satellite, sécurisée entre les stations ST1 et ST2 (flèches F7, F8 et F9).

Par exemple, le module de contrôle CMi-k configure la couche MAC satellite (pour « Medium Access Contrl ») de l'une des piles de protocoles du terminal de satellite STi de sorte que le traitement puisse être appliqué au flux IP. Cela consiste plus précisément à prioriser et/ou crypter au sein de la couche MAC satellite les adresses source et destination et les ports source et destination.

La station ST peut effectuer n'importe quel traitement sur des flux. Il peut notamment s'agir d'une priorisation de certains flux, d'une QoS sur certains flux, d'une suppression de flux indésirable(s), d'un chiffrement ou d'une signature de flux, et analogues.

Par ailleurs, ces flux peuvent être, notamment, de niveau IP, ATM, Ethernet, MPLS, satellite, applicatifs, et analogues.

Le dispositif de contrôle selon l'invention peut non seulement permettre le contrôle de flux dits sortants, comme décrit ci-dessus, mais il peut également permettre le contrôle de flux dits entrants et de flux dits bidirectionnels.

Plus précisément, chaque module de traitement Pi-k est préférentiellement agencé de manière à délivrer au module de contrôle CMi auquel il est couplé, des données de service représentatives de la qualité de service et/ou de la sécurité associée(s) à un flux d'application qui doit être reçu par le module de communications Ci du terminal de satellite STi dans lequel il est implanté. De la sorte, le module de contrôle CMi peut configurer le terminal de satellite STi de sorte qu'il réserve pour le flux entrant, qui doit prochainement arriver d'un terminal de communications ST distant, des ressources, d'un lien satellite allant du terminal de satellite distant vers lui-même, adaptées aux besoins de qualité de service et/ou de sécurité de l'application à laquelle ledit flux entrant est associé.

Dans le cas d'une demande de réservation de ressources associées à une liaison bidirectionnelle, le module de traitement Pi-k est préférentiellement agencé de manière à délivrer au module de contrôle CMi auquel il est couplé, des données de service représentatives de la qualité de service et/ou de la sécurité associée(s) à des flux d'application sortants et entrants. De la sorte, le module de contrôle CMi peut configurer son terminal de satellite STi de sorte qu'il réserve, tant pour les futurs flux sortants que pour les futurs flux entrants, des ressources, d'un lien satellite bidirectionnel, adaptées aux besoins de qualité de service et/ou de sécurité de l'application à laquelle lesdits flux entrants et sortants sont associés.

Par ailleurs, il n'est pas obligatoire que l'action du dispositif sur un flux de paquets, par exemple de type IP, concerne l'intégralité des paquets de ce flux. On peut en effet envisager que les premiers paquets d'un flux soient transmis par le terminal de satellite STi sans sécurité et/ou sans qualité de service, et que la sécurité et/ou la qualité de service soient instaurées « à la volée » pour les paquets suivants. On peut également envisager un mode de fonctionnement de type « bloquant », dans lequel les premiers paquets d'un flux sont mis en attente tant que la sécurité et/ou la qualité de service n'ont pas été instaurées (ou en d'autres termes tant que le trajet sécurisé et/ou la bande passante n'ont pas été réservés).

En outre, il est possible d'utiliser des marquages de type Diffserv pour permettre la différenciation de flux au niveau d'un terminal de satellite STi. Le protocole Diffserv permet en effet d'utiliser des bits de l'entête d'un flux IP pour préciser le type de ce flux. Dans ce cas, chaque module d'extraction Ei-k (de préférence) peut être agencé de manière à imposer aux paquets IP, qu'il observe au niveau du noyau Ni-k, un marquage Diffserv cohérent avec les besoins de l'application associée et bien entendu avec les capacités du réseau satellitaire. Le module de traitement Pi-k doit ensuite signaler au module de contrôle CMi que le marquage Diffserv utilisé est cohérent et doit être pris en compte. Dans ce cas, les marquages des flux IP qui ne sont pas du même type sont ignorés et ces flux IP sont gérés avec la qualité de service par défaut.

Il est important de noter que le module de contrôle CMi d'une station peut fonctionner de façon autonome, ou de façon distribuée. Dans ce dernier cas, il délivre ses données de configuration après avoir reçu une autorisation (ou une confirmation) d'un serveur central tel qu'un gestionnaire de bande passante (ou « bandwidth broker ») ou un NCC (pour « Network Control Center »), ou encore un serveur de clés chargé de distribuer des clés pour sécuriser des liens (ou liaisons).

Le dispositif de contrôle, et plus précisément ses modules de traitement P, d'extraction E et de contrôle C, ainsi qu'éventuellement chaque mémoire M, peuvent être réalisés sous la forme de circuits électroniques, de modules logiciels (ou informatiques), ou d'une combinaison de circuits et de logiciels. Le fonctionnement de base du dispositif de contrôle selon l'invention peut être résumé par l'exemple décrit ci-dessous.

Un utilisateur lance par exemple une application ftp implantée dans son équipement d'utilisateur UE1 afin de transférer (ou « upload ») un fichier vers le serveur de son réseau. L'application ftp envoie alors un premier paquet IP pour établir une liaison TCP avec ledit serveur.

Le module d'extraction E1 implanté dans l'équipement UE1 détecte le premier paquet IP au niveau du noyau N1 de son équipement UE1, et récupère toutes les informations qui lui sont associées (adresses IP, ports, références de l'application ftp, nom, icône, etc) afin d'identifier l'application. Il adresse ensuite au module de traitement P1 auquel il est couplé un message désignant l'application ftp.

Le module de traitement P1 détermine alors dans la table de contexte de la mémoire M1 s'il existe des données de service (ou contexte) associées à l'application ftp. Si par exemple ce n'est pas le cas, il ouvre une fenêtre de dialogue grâce à l'interface graphique G11 de l'équipement UE1 pour demander à l'utilisateur les données de service (ou contexte) qu'il désire associer à l'application ftp. Par exemple, l'utilisateur désire un débit de 100 kbits/s et le chiffrement (ou cryptage) de la communication.

Une fois en possession du contexte de l'application ftp, le module de traitement P1 dialogue avec le module de contrôle CM1 implanté dans le terminal de satellite ST1 pour lui fournir ledit contexte et lui permettre de configurer la couche MAC satellite et permettre au terminal de satellite ST1 de traiter le flux IP. L'utilisateur peut éventuellement contrôler le débit réel entrant/sortant de son équipement UE1, et décider de modifier le contexte associé au flux IP de l'application ftp.

L'invention ne se limite pas aux modes de réalisation de réseau, de station de communications, de terminal de communications et de dispositif de contrôle décrits ci-avant, seulement à titre d'exemple, mais elle englobe toutes les variantes que pourra envisager l'homme de l'art dans le cadre des revendications ci-après.

Ainsi, dans ce qui précède il a été décrit une application de l'invention aux réseaux de communications de type satellitaire. Mais l'invention concerne tous les réseaux dans lesquels il est possible d'associer au moins un traitement particulier à un flux de données.

## Revendications

1. Dispositif de contrôle de traitement(s) associé(s) à des flux de données d'applications, pour un réseau de communications comprenant des stations de communications (STi) propres à échanger entre-elles des flux de données et couplées à des terminaux de communications (UEi-k) munis d'au moins une application (An) et d'un noyau (Ni-k) contenant des données d'informations représentatives desdites applications, **caractérisé en ce qu'**il comprend i) des moyens de traitement (Pi-k) agencés, à réception d'un message désignant une application, pour délivrer des données de service représentatives d'au moins un traitement associé à ladite application désignée, ii) des moyens d'extraction (Ei-k) agencés, à réception d'un flux de données émis par un terminal de communications (UEi-k), pour accéder au noyau (Ni-k) dudit terminal de manière à déterminer l'application associée audit flux reçu, puis délivrer auxdits moyens de traitement (Pi-k) un message désignant ladite application déterminée, et iii) des moyens de contrôle (CMi-k) agencés, à réception de données de service délivrées par lesdits moyens de traitement, pour délivrer des données de configuration propres à permettre au moins un traitement adapté aux besoins de l'application associée au flux reçu, par la station de communications (STi) à laquelle est couplé le terminal (UEi-k) duquel est issu ledit flux.

2. Dispositif selon la revendication 1, **caractérisé en ce que** chaque noyau (Ni-k) de terminal de communications (UEi-k) comportant une interface (Cl-k) de contrôle en temps réel des flux réseaux associés auxdites applications, lesdits moyens d'extraction (Ei-k) sont agencés, à réception d'un flux de données, pour accéder à ladite interface de contrôle (Cl-k) de manière à déterminer l'application associée audit flux reçu.

3. Dispositif selon l'une des revendications 1 et 2, **caractérisé en ce qu'**il comprend des moyens de mémorisation (Mi-k) propres à stocker une table de correspondance entre lesdites applications et lesdites données de service, et **en ce que** lesdits moyens de traitement (Pi-k) sont agencés, à réception d'un message désignant une application, pour accéder auxdits moyens de mémorisation (Mi-k) de manière à déterminer des données de service stockées en correspondance de ladite application désignée.

4. Dispositif selon la revendication 3, **caractérisé en ce qu'**en l'absence, dans lesdits moyens de mémorisation (Mi-k), de données de services stockées en correspondance d'une application désignée, lesdits moyens de traitement (Pi-k) sont agencés pour adresser à un utilisateur, via une interface graphique (Gl-k) du terminal de communications (UEi-k) dans lequel lesdits moyens d'extraction (Ei-k) sont implantés, un message requérant lesdites données de service associées à l'application désignée.

5. Dispositif selon l'une des revendications 3 et 4, **caractérisé en ce que** lesdits moyens d'extraction (Ei-k) sont agencés pour mettre à jour ladite table de correspondance en fonction d'informations reçues.

6. Dispositif selon la revendication 5, **caractérisé en ce que** lesdites informations de mise à jour sont contenues dans un fichier de configuration reçu par le terminal de communications (UEi-k) dans lequel lesdits moyens d'extraction (Ei-k) sont implantés.

7. Dispositif selon la revendication 5, **caractérisé en ce que** lesdites informations de mise à jour sont délivrées par une interface graphique (Gl-k) du terminal de communications (UEi-k) dans lequel lesdits moyens d'extraction (Ei-k) sont implantés.

8. Dispositif selon l'une des revendications 1 à 7, **caractérisé en ce que** lesdits moyens d'extraction (Ei-k) sont implantés dans une pile de protocoles d'un noyau (Ni-k) de terminal de communications (UEi-k).

9. Dispositif selon l'une des revendications 1 à 8, **caractérisé en ce que**, chaque station de communications (STi) possédant au moins une pile de protocoles agencée en couches, dont une couche MAC, lesdits moyens de contrôle (CMi) sont agencés, à réception de données de service, pour délivrer des données de configuration propres à configurer ladite couche MAC en fonction des besoins associés à un flux à transmettre ou à recevoir.

10. Dispositif selon l'une des revendications 1 à 9, **caractérisé en ce que** lesdits moyens de traitement (Pi-k) sont agencés pour délivrer auxdits moyens de contrôle (CMi) des données de service représentatives d'au moins un traitement associé à des flux à recevoir d'une application implantée dans un terminal de communications (UEi-k) distant.

11. Dispositif selon l'une des revendications 1 à 10, **caractérisé en ce que** lesdits moyens de contrôle (CMi) sont agencés pour délivrer lesdites données de configuration à réception d'une autorisation délivrée par un serveur central dudit réseau.

12. Dispositif selon l'une des revendications 1 à 11, **caractérisé en ce que** lesdits moyens de traitement (Pi-k) et lesdits moyens de contrôle (CMi) sont agences pour échanger des messages de service contenant lesdites, données de service selon un protocole d'échange choisi parmi un protocole propriétaire, le protocole SNMP, le protocole XML et le protocole RSVP_{.}

13. Dispositif selon l'une des revendications 1à 12, **caractérisé en ce que** ledit traitement est choisi dans un groupe comprenant au moins la qualité de service, le chiffrement, l'authentification, l'établissement de session, la priorisation de flux et la suppression de flux.

14. Terminal de communications (UEi-k); **caractérisé en ce qu'**il comprend un dispositif de contrôle selon l'une des revendications 1 à 13.

15. Station de communications (STi), **caractérisée en ce qu'**elle comprend des moyens de contrôle (CMi) d'un dispositif de contrôle selon l'une des revendications 1 à 13.

16. Station selon la revendication 15, **caractérisée en ce qu'**elle est agencée sous la forme d'un terminal de satellite.

17. Réseau de communications, **caractérisé en ce qu'**il comprend une multiplicité de stations de communications (STi) selon l'une des revendications 15 à 16 et des terminaux de communications (UEi-k) selon la revendication 14.

18. Réseau de communications selon la revendication 17, **caractérisé en ce qu'**il est choisi dans un groupe comprenant au moins les réseaux satellitaires et les réseaux sans fil.

## Claims

1. A device for controlling processing associated with application data streams, for a communications network comprising communications stations (STi) capable of exchanging data streams with one another and coupled to communication terminals (UEi-k) equipped with at least one application (An) and with a core (Ni-k) containing information data representative of said applications, **characterized in that** it comprises i) means of processing (Pi-k) adapted, upon receiving a message designating an application, to deliver service data representative of at least one processing associated with said designated application, ii) means of extraction (Ei-k) adapted, upon receiving a data stream emitted by a communications terminal (UEi-k), to access the core (Ni-k) of said terminal so as to determine the application associated with said received stream, then to deliver to said means of processing (Pi-k) a message designating said determined application, and iii) means of control (CMi-k) adapted, upon receiving service data delivered by said means of processing, to deliver configuration data capable of allowing at least one processing suitable for the needs of the application associated with the received stream, by the communications station (STi), to which is coupled the terminal (UEi-k) from which said stream originated.

2. A device according to claim 1, **characterized in that** each communications terminal (UEi-k) core (Ni-k) comprising an interface (Cl-k) to control the network streams associated with said applications in real time, said means of extraction (Ei-k) are adapted, upon receiving a data stream, to access said control interface (Cl-k) so as to determine the application associated with said received stream.

3. A device according to one of the claims 1 and 2, **characterized in that** it comprises means of memorization (Mi-k) capable of storing a table matching said applications and said service data, and **in that** the means of processing (Pi-k) are adapted, upon receiving a message designating an application, to access said means of memorization (Mi-k) so as to determine service data stored as a match for said designated application.

4. A device according to claim 3, **characterized in that**, in the absence, within said means of memorization (Mi-k), of data stored as a match for a designated application, said means of processing (Pi-k) are adapted to send a user, via a graphical interface (Gl-k) of the communications terminal (UEi-k) in which said means of extraction (Ei-k) are located, a message requesting said service data associated with the designated application.

5. A device according to any of the claims 3 and 4, **characterized in that** said means of extraction (Ei-k) are adapted to update said table based on received information.

6. A device according to claim 5, **characterized in that** said update information is contained within a configuration file received by the communications terminal (UEi-k) in which said means of extraction (Ei-k) are located.

7. A device according to claim 5, **characterized in that** said update information is delivered by a graphical interface (Gl-k) of the communications terminal (UEi-k) in which said means of extraction (Ei-k) are located.

8. A device according to any of the claims 1 to 7, **characterized in that** said means of extraction (Ei-k) are located within a protocol stack of a communications terminal (UEi-k) core (Ni-k).

9. A device according to any of the claims 1 to 8, **characterized in that**, each communications station (STi) possessing at least one protocol stack arranged into layers, including a MAC layer, said means of control (CMi) are adapted, upon receiving service data, to deliver configuration data capable of configuring said MAC layer based on the needs associated with a stream to be transmitted or received.

10. A device according to any of the claims 1 to 9, **characterized in that** said means of processing (Pi-k) are adapted to deliver to said means of control (CMi) service data representative of at least one processing associated with streams to be received from an application located within a remote communications terminal (UEi-k).

11. A device according to any of the claims 1 to 10, **characterized in that** said means of control (CMi) are adapted to deliver said configuration data upon the receipt of an authorization delivered by a central server of said network.

12. A device according to any of the claims 1 to 11, **characterized in that** said means of processing (Pi-k) and said means of control (CMi) our adapted to exchange service messages containing said service data in accordance with an exchange protocol chosen from among a proprietary protocol, the SNMP protocol, the XML protocol, and the RSVP protocol.

13. A device according to any of the claims 1 to 12, **characterized in that** said processing is chosen from a group comprising at least quality of service, encryption, authentication, session establishment, stream prioritization, and stream deletion.

14. A communications terminal (UEi-k), **characterized in that** it comprises a control device according to one of the claims 1 to 13.

15. A communications station (UEi-k), **characterized in that** it comprises means of control (CMi) of a control device according to one of the claims 1 to 13.

16. A station according to claim 15, **characterized in that** it is arranged in the form of a satellite terminal.

17. A communications network, **characterized in that** it comprises a multiplicity of communications stations (STi) according to one of the claims 15 to 16 and communications terminals (UEi-k) according to claim 14.

18. A communications network according to claim 17, **characterized in that** it is chosen from a group comprising at least satellite networks and wireless networks.

## Patentansprüche

1. Vorrichtung zur Steuerung der mit Anwendungsdatenflüssen assoziierten Verarbeitung(en) für ein Kommunikationsnetzwerk mit Kommunikationsstationen (STi), die dazu ausgelegt sind, Datenflüsse untereinander auszutauschen und an Kommunikationsendgeräte (UEi-k), welche mit mindestens einer Anwendung (An) und einem Kern (Ni-k), der für die besagten Anwendungen repräsentative informationsdaten enthält, ausgestattet sind, gekoppelt sind, **dadurch gekennzeichnet, dass** sie umfasst: i) Verarbeitungsmittel (Pi-k), die dazu ausgelegt sind, bei Empfang einer eine Anwendung bezeichnenden Nachricht Dienstdaten bereitzustellen, welche für mindestens eine mit der besagten bezeichneten Anwendung assoziierte Verarbeitung repräsentativ sind, ii) Extraktionsmittel (Ei-k), die dazu ausgelegt sind, bei Empfang eines von einem Kommunikationsendgerät (UEi-k) ausgegebenen Datenflusses auf den Kern (Ni-k) des besagten Endgeräts zuzugreifen, um die mit dem besagten empfangenen Datenfluss assoziierte Anwendung zu ermitteln und anschließend eine Nachricht, welche die besagte ermittelte Anwendung bezeichnet, an die besagten Verarbeitungsmittel (Pi-k) bereitzustellen, und iii) Steuermittel (CMi-k), die dazu ausgelegt sind, bei Empfang von von den besagten Verarbeitungsmitteln bereitgestellten Dienstdaten Konfigurationsdaten bereitzustellen, die geeignet sind, zumindest eine Verarbeitung, die den Anforderungen der mit dem empfangenen Datenfluss assoziierten Anwendung entspricht, durch die Kommunikationsstation (STi), an welche das Endgerät (UEi-k), von dem der besagte Datenfluss stammt, gekoppelt ist, zu ermöglichen.

2. Vorrichtung nach Anspruch 1, **dadurch gekennzeichnet, dass** jeder Kern (Ni-k) des Kommunikationsendgeräts (UEi-k) eine Schnittstelle (Cl-k) zur Steuerung der mit den besagten Anwendungen assoziierten Netzwerkdatenflüsse in Echtzeit umfasst, wobei die besagten Extraktionsmittel (Ei-k) dazu ausgelegt sind, bei Empfang eines Datenflusses auf die besagte Steuerschnittstelle (Cl-k) zuzugreifen, um die mit dem besagten empfangenen Datenfluss assoziierte Anwendung zu ermitteln.

3. Vorrichtung nach einem der Ansprüche 1 und 2, **dadurch gekennzeichnet, dass** sie Speichermittel (Mi-k) umfasst, die geeignet sind, eine Korrespondenztabelle zwischen den besagten Anwendungen und den besagten Dienstdaten zu speichern, und dass die besagten Verarbeitungsmittel (Pi-k) dazu ausgelegt sind, bei Empfang einer Nachricht, welche eine Anwendung bezeichnet, auf die besagten Speichermittel (Mi-k) zuzugreifen, um der besagten bezeichneten Anwendung entsprechende gespeicherte Dienstdaten zu ermitteln.

4. Vorrichtung nach Anspruch 3, **dadurch gekennzeichnet, dass**, wenn in den besagten Speichermitteln (Mi-k) keine Dienstdaten, die einer bezeichneten Anwendung entsprechen, gespeichert sind, die besagten Verarbeitungsmittel (Pi-k) dazu ausgelegt sind, einem Nutzer über eine grafische Schnittstelle (Gl-k) des Kommunikationsendgeräts (UEi-k), in welchem die besagten Extraktionsmittel (Ei-k) installiert sind, eine Nachricht zu adressieren, welche die besagten mit der bezeichneten Anwendung assoziierten Dienstdaten anfordert.

5. Vorrichtung nach einem der Ansprüche 3 und 4, **dadurch gekennzeichnet, dass** die besagten Extraktionsmittel (Ei-k) für das Aktualisieren der besagten Korrespondenztabelle gemäß den empfangenen Informationen ausgelegt sind.

6. Vorrichtung nach Anspruch 5, **dadurch gekennzeichnet, dass** die besagten Aktualisierungsinformationen in einer von dem Kommunikationsendgerät (UEi-k), in welchem die besagten Extraktionsmittel (Ei-k) installiert sind, empfangenen Konfigurationsdatei enthalten sind.

7. Vorrichtung nach Anspruch 5, **dadurch gekennzeichnet, dass** die besagten Aktualisierungsdaten von einer grafischen Schnittstelle (Gl-k) des Kommunikationsendgeräts (UEi-k), in welchem die besagten Extraktionsmittel (Ei-k) installiert sind, bereitgestellt werden.

8. Vorrichtung nach einem der Ansprüche 1 bis 7, **dadurch gekennzeichnet, dass** die besagten Extraktionsmittel (Ei-k) in einem Protokollstapel eines Kerns (Ni-k) des Kommunikationsendgeräts (UEi-k) installiert sind.

9. Vorrichtung nach einem der Ansprüche 1 bis 8, **dadurch gekennzeichnet, dass** jede Kommunikationsstation (STi) mindestens einen in Schichten, welche eine MAC-Schicht umfassen, angeordneten Protokollstapel aufweist, wobei die besagten Steuermittel (CMi) dazu ausgelegt sind, bei Empfang von Dienstdaten Konfigurationsdaten bereitzustellen, die geeignet sind, die besagte MAC-Schicht gemäß den mit einem zu übertragenden oder zu empfangenden Datenfluss assoziierten Anforderungen zu konfigurieren.

10. Vorrichtung nach einem der Ansprüche 1 bis 9, **dadurch gekennzeichnet, dass** die besagten Verarbeitungsmittel (Pi-k) dazu ausgelegt sind, Dienstdaten, die für mindestens eine mit von einer in einem entfernten Kommunikationsendgerät (UEi-k) installierten Anwendung zu empfangenden Datenflüssen assoziierte Verarbeitung repräsentativ sind, an die besagten Steuermittel (CMi) bereitzustellen.

11. Vorrichtung nach einem der Ansprüche 1 bis 10, **dadurch gekennzeichnet, dass** die besagten Steuermittel (CMi) für das Bereitstellen der besagten Konfigurationsdaten bei Empfang einer von einem zentralen Server des besagten Netzwerks ausgegebenen Freigabe ausgelegt sind.

12. Vorrichtung nach einem der Ansprüche 1 bis 11, **dadurch gekennzeichnet, dass** die besagten Verarbeitungsmittel (Pi-k) und die besagten Steuermittel (CMi) dazu ausgelegt sind, Dienstnachrichten, welche die besagten Dienstdaten enthalten, gemäß einem Austauschprotokoll, gewählt in einer Gruppe bestehend aus einem proprietären Protokoll, dem SNMP-Protokoll, dem XML-Protokoll und dem RSVP-Protokoll, auszutauschen.

13. Vorrichtung nach einem der Ansprüche 1 bis 12, **dadurch gekennzeichnet, dass** die besagte Verarbeitung in einer Gruppe zumindest bestehend aus der Dienstgüte, der Verschlüsselung, der Authentifizierung, der Herstellung einer Sitzung, der Priorisierung der Datenflüsse und der Löschung von Datenflüssen gewählt wird.

14. Kommunikationsendgerät (UEi-k), **dadurch gekennzeichnet, dass** es eine Steuervorrichtung gemäß einem der Ansprüche 1 bis 13 umfasst.

15. Kommunikationsstation (UEi-k), **dadurch gekennzeichnet, dass** sie Steuermittel (CMi) einer Steuervorrichtung gemäß einem der Ansprüche 1 bis 13 umfasst.

16. Station nach Anspruch 15, **dadurch gekennzeichnet, dass** sie in der Form eines Satellitenendgeräts ausgelegt ist.

17. Kommunikationsnetzwerk, **dadurch gekennzeichnet, dass** es eine Vielzahl von Kommunikationsstationen (STi) gemäß einem der Ansprüche 15 bis 16 sowie Kommunikationsendgeräte (UEi-k) gemäß Anspruch 14 umfasst.

18. Kommunikationsnetzwerk nach Anspruch 17, **dadurch gekennzeichnet, dass** es in einer Gruppe zumindest bestehend aus den Satellitennetzwerken und den drahtlosen Netzwerken gewählt wird.
